# EUROPÄISCHE PATENTSCHRIFT

(11) **EP 0 538 608 B1**
(45) Veröffentlichungstag und Bekanntmachung des Hinweises auf die Patenterteilung: **28.02.1996**
(21) Anmeldenummer: 92115243.5
(22) Anmeldetag: 05.09.1992
(51) Int. Cl.: B60J 1/02, F16F 7/10, B62D 37/04

(54) **Vorrichtung zur Tilgung von Torsionsschwingungen**
Device for damping torsional vibrations
Dispositif pour amortir des vibrations de torsion

(30) Priorität: 19.10.1991 DE 4134674
(43) Veröffentlichungstag der Anmeldung: 28.04.1993
(73) Patentinhaber: Dr.Ing.h.c. F. Porsche Aktiengesellschaft, D-70435 Stuttgart (DE)
(72) Erfinder: Kohlmeier, Hans-Heinrich, W-7251 Mönsheim (DE); Bayer, Heinz, W-7900 Ulm (DE)

(56) Entgegenhaltungen:
- EP-A- 0 052 291
- EP-A- 0 098 657
- EP-A- 0 478 936
- AU-B- 411 207
- FR-A- 1 069 859
- US-A- 3 438 648
- US-A- 3 606 380
- US-A- 3 614 126
- REVUE AUTOMOBILE Bd. 87, Nr. 17, 23. April 1992, BERN,CH Seite 19 'M-B 300 CE- 24, Un cabriolet pourvu de tous les raffinements'

## Beschreibung

Die Erfindung bezieht sich auf eine
Vorrichtung zur Tilgung von aufbauseitigen Torsionsschwingungen an einem Cabriolet-Fahrzeug über einen aus einem mittels elastischer Lager gehaltenen Massekörper bestehenden Tilger, wobei der Tilger an einem Rahmen einer Windschutzscheibe über Schublager elastisch gehalten und mit Abstand zum Rahmen in Querrichtungen des Fahrzeugs relativ frei schwingend angeordnet ist und der Tilger eine der Torsionseigenfrequenz des Fahrzeugs im Bereich des Rahmens gleiche Frequenz aufweist und die Lager eine durch ihre Geometrie bedingte Schubsteifigkeit aufweisen.

Bei Fahrzeugen in Cabriolet-Bauweise treten aufgrund der Struktur, die gegenüber Coupé-Fahrzeugen eine geringere Torsionssteifigkeit aufweisen, die insbesondere im Bereich der Windschutzscheibe derartige Vibrationen bzw. Schwingungsausschläge verursachen, daß z.B. der an der Windschutzscheibe befestigte Rückblickspiegel solche Schwingungen ausführt, daß ein Rückblick erschwert wird.

Es sind Schwingungstilger für die verschiedenen Anwendungsbereiche im Fahrzeugbau, wie z.B. eine Antriebswelle (DE-OS 36 32 418) und eine Antriebseinheit (DE-PS 31 25 830) bekannt. Diese Tilger sind in elastischen Buchsen gehalten, welche aufgrund der Platzverhältnisse einen zur optimalen Schwingungsdämpfung entsprechenden Raum einnehmen können.

Aufgabe der Erfindung ist es, einen Schwingungstilger in einem Cabriolet-Fahrzeug zu schaffen, der eine optimal abgestimmte Tilgung von Schwingungen auf die Torsionseigenfrequenzen des Fahrzeuges gewährleistet.

Diese Aufgabe wird erfindungsgemäß durch die Merkmale des Anspruchs 1 gelöst. Weitere vorteilhafte Merkmale beinhalten die Unteransprüche.

In dem internen stand der Technik DE-40 30 990 A1 ist bereits ein Schwingungstilger im Scheibenrahmen eines Cabriolet-Fahrzeugs beschrieben, der endseitig in elastischen Schublagern gehalten wird und über diese im Rahmen abgestützt ist. Diese Lager sind in Querrichtung des Fahrzeugs sehr viel weicher ausgelegt als in Hoch- und Längsrichtungen.

Nach der Erfindung wird gegenüber der Hauptanmeldung P 40 30 990.8, bei der endseitig angeordnete elastische Gummilager als Schublager Verwendung finden, spezielle Blattfedern verwendet, die im Zusammenspiel mit einem mittig der Tilgermasse angeordneten Schublager eine gezielte Querverschiebung des Massenkörpers gewährleisten und wobei die Blattfedern ein Auslenken in Hoch- und Längsrichtungen des Fahrzeugs unterbinden, wodurch eine gezielte Führung der Tilgermasse gewährleistet ist.

Die mit der Erfindung hauptsächlich erzielten Vorteile bestehen darin, daß die Schwingungen am Rahmen der Windschutzscheibe über den Tilger soweit abgebaut werden können, daß z.B. ein ungehinderter Rückblick durch den an der Windschutzscheibe oder am Rahmen befestigten Spiegel ermöglicht wird. Darüber hinaus wird auch das übliche Schwingungsverhalten, insbesondere im Armaturenbereich mit Lenkrad, deutlich verbessert.

Der Tilger ist an einem Rahmenelement, das mit dem oberen Scheibenrahmen des Fahrzeugs verbindbar ist, befestigt. Dies erfolgt über mindestens ein mittiges Schublager und den an den freien Enden der Tilgermasse angeordneten Blattfederelementen. Die Tilgermasse ist über die Blattfederelemente so gehalten, daß nur eine Querbewegung erfolgen kann und eine Bewegung in anderen Richtungen weitestgehend ausgeschlossen wird.

Das oder die Schublager ist (sind) in einer Ausnehmung der Tilgermasse freiliegend angeordnet, so daß eine unbehinderte Querbewegung der Tilgermasse erfolgen kann. Die Führung in dieser Richtung erfolgt über die endseitig angebrachten Blattfederelemente, die hierzu dementsprechend in Hoch- und Längsrichtung steif sowie in Querrichtung weich dimensioniert sind.

Wenn zwei nebeneinander im Abstand angeordnete Schublager in der Tilgermasse Verwendung finden, ist eine breitere Lagerbasis für die Tilgermasse in Querrichtung gewährleistet, als bei nur einem Schublager.

Ein Ausführungsbeispiel der Erfindung ist in der Zeichnung dargestellt und wird im folgenden näher beschrieben.
Es zeigen
- Fig. 1: eine schematische Darstellung eines Einbauortes des Schwingungstilgers im Scheibenrahmen,
- Fig. 2: eine vergrößerte Darstellung Z aus Fig. 1 des Schwingungstilgers in dem oberen Scheibenrahmen,
- Fig. 3: eine Draufsicht auf einen Tilger mit endseitigen Blattfederelementen und einem mittigen Schublager,

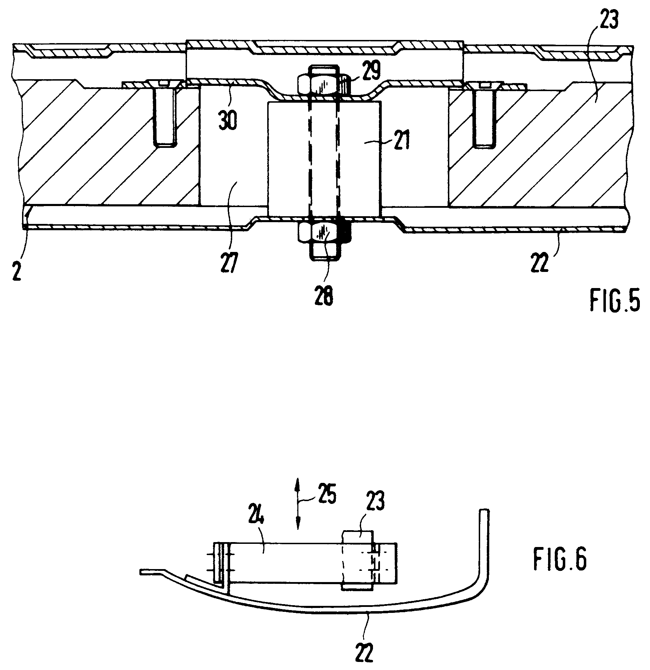

- Fig. 4: einen Schnitt nach der Linie II-II der Fig. 1,
- Fig. 5: einen Schnitt nach der Linie III-III der Fig. 2, und
- Fig. 6: eine Sicht in Richtung X der Fig. 1.

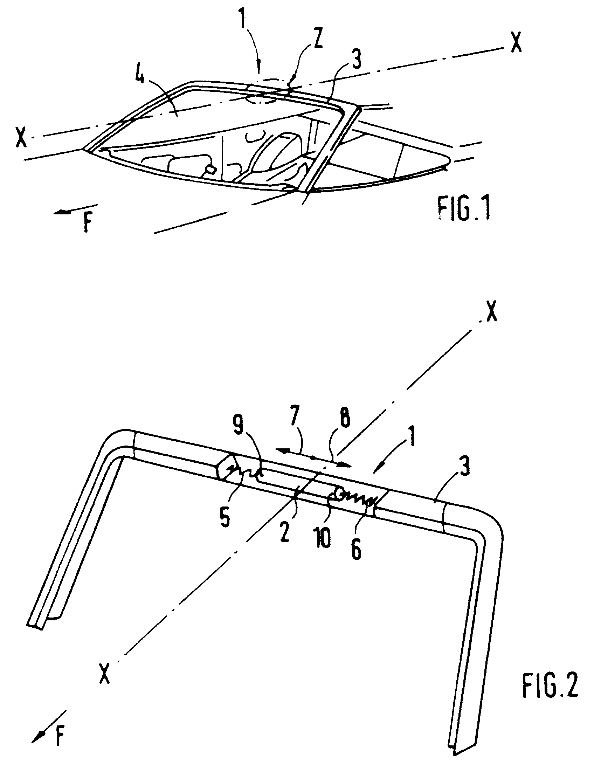

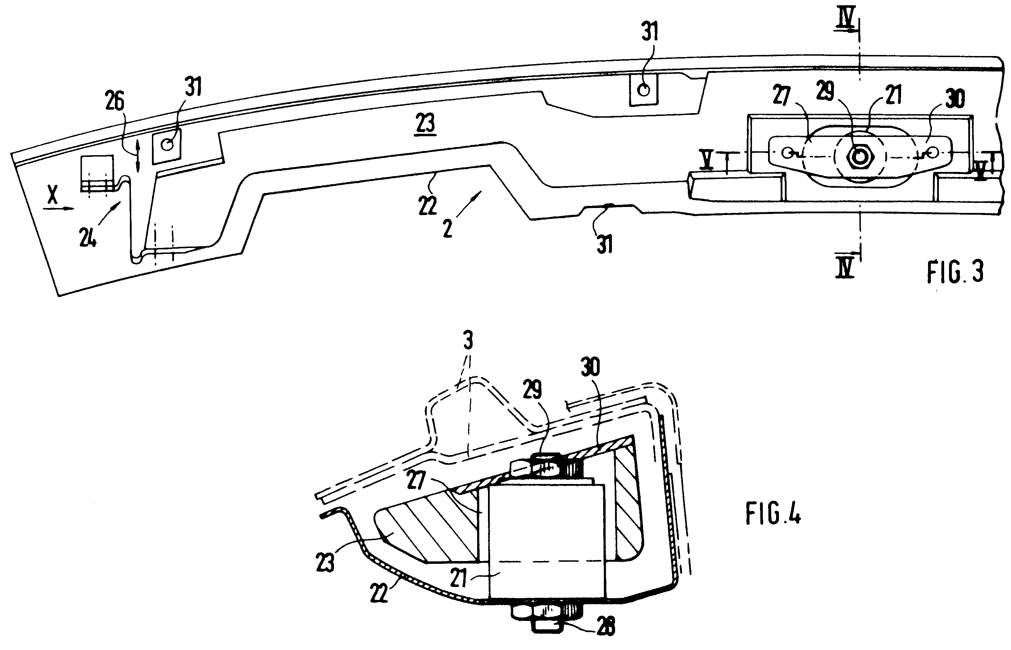

Eine bekannte Vorrichtung 1 zur Tilgung von Torsionsschwingungen nach der DE- 40 30 990 A1 umfasst gemäß der Fig. 1 und 2 einen Tilger 2 am oberen Scheibenrahmen 3 bzw. am Dachrahmen einer Windschutzscheibe 4, welche an elastischen Lagern 5 und 6 in Pfeilrichtungen 7 und 8 annähernd horizontal schwingend bewegbar angeordnet ist. Der Tilger 2 besteht aus einem metallischen Werkstoff mit einer möglichst großen spezifischen Wichte, wie z.B. Stahl, Blei oder dergleichen Werkstoff, und ist endseitig, d.h. an seinen freien Enden 9 und 10 in diesen elastischen Lagern 5 und 6 gehalten. Der Tilger 2 kann nach einer Weiterbildung auch über mindestens ein mittiges Schublager 21 an einem Rahmenelement 22 in Querrichtungen 7, 8 elastisch bewegbar abgestützt sein. Die freien Enden der Tilgermasse 23 sind jeweils mit einem Blattfederelement 24 verbunden, das die Tilgermasse 23 in Querrichtungen 7, 8 führt. Hierzu sind die Blattfederelemente 24 in Hochrichtungen 25 und Längsrichtungen 26 relativ steif ausgeführt und in den Querrichtungen 7 und 8 dagegen weicher.

Das Schublager 21 ist in einer Ausnehmung 27 der Tilgermasse 23 angeordnet und mit einem Ende 28 am Rahmenelement 22 befestigt und mit einemam anderen Ende 29 über einen Halter 30 mit der Tilgermasse 23 verbunden. Statt des einen Lagers 21 können auch zwei oder mehrere Lager die Tilgermasse 23 in Querrichtungen 7 und 8 bewegbar halten.

Das Lager 21, z.B. als Rundlager ausgeführt, ist in der Weise dimensioniert, daß es eine Kennung aufweist, die in Hoch- und Längsrichtungen weitestgehend keine Bewegung der Tilgermasse 23 zulässt, aber in Querrichtungen entsprechend abgestimmt auf die Torsionseigenfrequenz der Karosserie eine elastische Bewegung ermöglicht. Die endseitigen Blattfederelemente 24 weisen eine definierte Höhe und Dicke auf, die eine exakte Führung der Tilgermasse 23 in Querrichtungen ohne Auslenkung in Hoch- und Längsrichtungen gewährleistet.

Das Rahmenelement 22, als Halbschale ausgeführt, nimmt den Tilger 2 auf und ist als Baueinheit mit dem ebenfalls als Halbschale ausgebildeten Scheibenrahmen 3 über Schrauben verbindbar. Die entsprechenden Bohrungen 31 zur Durchführung der Schrauben sind in Fig. 3 näher dargestellt. Nach Befestigung des Rahmenelements 2 am Scheibenrahmen 3 bildet der Rahmen eine geschlossene Einheit mit innenliegendem Tilger 2.

## Patentansprüche

1. Vorrichtung zur Tilgung von aufbauseitigen Torsionsschwingungen an einem Cabriolet-Fahrzeug über einen aus einem mittels elastischer Lager gehaltenen Massekörper bestehenden Tilger, wobei der Tilger an einem Rahmen einer Windschutzscheibe über Schublager elastisch gehalten und mit Abstand zum Rahmen in Querrichtungen des Fahrzeugs relativ frei schwingend angeordnet ist und der Tilger eine der Torsionseigenfrequenz des Fahrzeugs im Bereich des Rahmens gleiche Frequenz aufweist und die Lager eine durch ihre Geometrie bedingte Schubsteifigkeit aufweisen, wobei der Tilger (2) über mindestens ein mittiges Schublager (21) zum Rahmenelement (22) hin elastisch abgestützt ist, wobei endseitig der Tilgermasse (23) jeweils ein Blattfederelement (24) angeordnet und, eine Querbewegung der Tilgermasse (23) zulassend, abstützend zum Rahmenelement (22) gelagert ist.

2. Vorrichtung nach Anspruch 1, **dadurch gekennzeichnet,** daß das Blattfederelement (24) in Hoch- und Längsrichtungen (25 und 26) steif, aber in Querrichtungen (7 und 8) des Fahrzeugs weich ausgebildet ist.

3. Vorrichtung nach den Ansprüchen 1 oder 2, **dadurch gekennzeichnet,** daß das Schublager (21) in einer Ausnehmung (27) der Tilgermasse (23) freiliegend angeordnet ist und sich einerseits am Rahmenelement (22) abstützt und andererseits über einen Halter (30) mit der Tilgermasse (23) verbunden ist.

4. Vorrichtung nach den Ansprüchen 1, 2 oder 3, **dadurch gekennzeichnet,** daß das Rahmenelement (22) als Anbauteil mit dem über das Schublager (21) und den Blattfederelementen (24) gehaltenen Tilger (2) ausgebildet und über Schrauben am Scheibenrahmen (3) befestigbar ist.

## Claims

1. A device for damping torsional vibrations on the body of a convertible by way of a damper comprising a body of inertia held by means of resilient bearings, wherein the damper is held resiliently on a frame of a windscreen by way of thrust bearings and is arranged at a distance from the frame so as to oscillate relatively freely in transverse directions of the vehicle, and the damper has a frequency equal to the natural torsional frequency of the vehicle in the region of the frame and the bearings have a thrust rigidity produced by the geometry thereof, wherein the damper (2) is resiliently supported with respect to the frame member (22) by way of at least one middle thrust bearing (21), and wherein a respective leaf-spring member (24) is arranged at each end of the damper mass (23) and is mounted in a supporting manner with respect to the frame member (22) so as to allow a transverse movement of the damper mass (23).

2. A device according to Claim 1, **characterized in that** the leaf-spring member (24) is made rigid in the vertical and longitudinal directions (25 and 26), but yielding in the transverse directions (7 and 8) of the vehicle.

3. A device according to Claim 1 or 2, **characterized in that** the thrust bearing (21) is arranged freely in a recess (27) in the damper mass (23) and on one side is supported on the frame member (22) and on the other side is connected to the damper mass (23) by way of a holder (30).

4. A device according to Claim 1, 2 or 3, **characterized in that** the frame member (22) is constructed as an attachment part with the damper (2) held by way of the thrust bearing (21) and the leaf-spring members (24) and can be secured to the windscreen frame (3) by way of bolts.

## Revendications

1. Dispositif d'amortissement des oscillations de torsion de la carrosserie d'un véhicule cabriolet, par un amortisseur constitué d'un corps de masse, maintenu au moyen de paliers élastiques, dans lequel l'amortisseur est maintenu élastiquement sur un cadre de pare-brise, par des paliers de poussée et est placé de manière à osciller relativement librement, à distance du cadre, dans des directions transversales du véhicule, et l'amortisseur présente une fréquence égale à la fréquence de résonance de torsion du véhicule dans la zone du cadre et les paliers présentent une résistance au cisaillement conditionneé par la géométrie, dans lequel l'amortisseur (2) est soutenu élastiquement par au moins un palier de poussée (21) central par rapport à l'élément de cadre (22), dans lequel côté extrémité de la masse d'amortissement (23) il est placé chaque fois un élément de ressort à lame (24), qui, autorisant un déplacement transversal de la masse d'amortissement (23), est monté de manière à prendra appui par rapport à l'élément de cadre (22).

2. Dispositif selon la revendication 1, caractérisé en ce que l'élément de ressort à lame (24) est rigide dans la direction verticale (25) et la direction longitudinale (26), mais est souple dans las directions transversales (7 et 8) du véhicule.

3. Dispositif selon les revendications 1 au 2, caractérisé en ce que le palier de poussée (21) est placé librement dans un évidement (27) de la masse d'amortissement (23) et prend appui d'une part contre l'élément de cadre (22) et d'autre part est relié à la masse d'amortissement (23), par un support (30).

4. Dispositif selon les revendications 1, 2 ou 3, caractérisé en ce que l'élément de cadre (22) est configuré en élément accessoire avec l'amortisseur (2) maintenu par le palier de poussée (21) et par las éléments de ressort à lame (24), et peut être fixé sur le cadre de vitre (3), par des vis.
